# EUROPÄISCHE PATENTSCHRIFT

(11) **EP 0 322 052 B1**
(45) Veröffentlichungstag und Bekanntmachung des Hinweises auf die Patenterteilung: **18.05.1994**
(21) Anmeldenummer: 88202917.6
(22) Anmeldetag: 16.12.1988
(51) Int. Cl.: G02B 6/44, H01B 7/18, H01B 7/00

(54) **Verfahren zur Herstellung einer auf ein Maschinenspule gewickelten Ader**
Method of manufacturing a cable core wounded on a machine spool
Procédé de fabrication d'une âme d'un câble enroulé sur une bobine

(30) Priorität: 22.12.1987 DE 3743484
(43) Veröffentlichungstag der Anmeldung: 28.06.1989
(73) Patentinhaber: Philips Patentverwaltung GmbH, 22335 Hamburg (DE); Philips Electronics N.V., 5621 BA Eindhoven (NL)
(72) Erfinder: Trodler, Dieter, D-5167 Vettweiss-Kelz (DE)
(74) Vertreter: Erdmann, Anton, Dipl.-Ing.

(56) Entgegenhaltungen:
- DE-A- 3 343 285
- GB-A- 2 142 280

## Beschreibung

Die Erfindung bezieht sich auf ein Verfahren zur Herstellung einer auf eine Maschinenspule gewickelten Ader, welche einen optisch oder elektrisch leitenden Kern aufweist, der von einer Kunststoffhülle umgeben ist.

Bei der Herstellung von Kabeln insbesondere für die Nachrichtenübertragung ist es üblich, kunststoffisolierte Kupferleiter oder kunststoffummantelte Lichtwellenleiter (LWL), die auf Maschinenspulen aufgewickelt sind, in rotierenden Verseilmaschinen zu Paaren, Dreiern, Vierern oder Bündeln zu verseilen. Aus produktionstechnischen Gründen müssen die Adern dabei häufig mit Rückdrehung verseilt werden, d.h. während des Verseilvorganges verbleibt die Stellung der Aderspule - gleichsam wie bei einer Planetenbewegung - im Verseilkorb immer in einer definierten Stellung.

Durch Schrumpfvorgänge der Kunststoffe nach dem Extrusionsprozeß verkleinert sich der Aderdurchmesser geringfügig, so daß sich das auf einer Maschinenspule aufgewickelte Aderpaket im Verlaufe der Zeit lockert. Der Lockerungsgrad ist umso größer, je dicker die Isolierschicht, je größer die Elemente und je länger die Ader ist, und ist umso kleiner, je größer die Aufwickelspannung des Drahtes auf die Spule ist. Die genannten Randbedingungen wirken sich besonders ungünstig bei der Weiterverarbeitung von ummantelten Lichtwellenleitern mit Längen von mehr als 2 km aus. Die Ader muß mit sehr geringer Aufwickelkraft auf die Maschinenspule gewickelt werden, damit die eingebrachte Überlänge der LWL nicht durch Dehnung der Ader unzulässig verringert wird.

Wird eine vollgewickelte Maschinenspule in einen rotierenden Verseilkorb eingelegt, um einen Verseilprozeß durchzuführen, lockert sich das Aderpaket derart, daß die Adern dabei unterstechen, indem einzelne Windungen in eine untere Wickellage gezogen werden. Dabei besteht die Gefahr, daß die Adern abreißen. Besonders gefährlich insbesondere bei LWL-Adern sind unregelmäßige Abzugsspannungen der Adern, welche die zu verseilenden ummantelten Lichtwellenleiter schädigen. Insbesondere wird das optische Dämpfungsverhalten der einzelnen LWL-Adern ungleichmäßig verschlechtert.

Der Erfindung liegt die Aufgabe zugrunde, das Verfahren der eingangs genannten Art derart zu gestalten, daß die Störanfälligkeit insbesondere beim schnellen Abwickeln der Adern von den Maschinenspulen verringert wird.

Die Lösung gelingt dadurch, daß auf die Oberfläche der Kunststoffhülle vor dem Auftrommeln auf die Maschinenspule eine optisch unauffällige Beschichtung aufgebracht wird, welche eine Gleitbewegung nebeneinanderliegender Aderwindungen durch erhöte Reibung untereinander und/oder durch gegenseitiges Verhaken erschwert. Dabei kann die Beschichtung kontinuierlich aus einem Stoff mit gegenüber der Kunststoffhülle höherem Reibwert aufgebracht werden. Es ist auch möglich, die Beschichtung diskontinuierlich aufzubringen.

Bei der erstgenannten Lösung bewirkt der hohe Reibungskoeffizient der Beschichtung, daß die Aderwindungen beim Abwickeln nicht mehr aus ihrer ursprünglichen Wickellage in eine Lage mit verringertem Wickeldurchmesser gezogen werden. Die Verringerung des Wickeldurchmessers setzt nämlich voraus, daß benachbarte Aderwindungen gegeneinander gleiten können.

Im zweitgenannten Fall bewirken die diskontinuierlich aufgebrachten Schichtabschnitte, welche um ein geringes Maß radial über die Kunststoffhülle der Ader überstehen, ein gegenseitiges Verhaken benachbarter Aderwindungen, so daß der gleiche Erfolg wie bei einer kontinuierlichen reibenden Beschichtung erreicht wird.

Besonders gute Ergebnisse wurden auf einfache Weise mit geringem Aufwand für Beschichtungsmaterial dadurch erzielt, daß die Beschichtung in Form von Ringen aufgebracht wird, welche in Längsrichtung der Ader mit einem Abstand aufeinanderfolgen, welcher ein Mehrfaches der Ringbreite beträgt. Es ist aber auch möglich, die Beschichtung in Form eines rauhen Belags aufzubringen, welcher beispielsweise durch Aufsprühen flüssiger Lacktröpfchen hergestellt werden kann.

Damit die erfindungsgemäß aufgebrachte Beschichtung nicht als Farbkennzeichnung mißverstanden werden kann, ist vorgesehen, daß eine farblose Beschichtung aufgebracht wird. Alternativ ist es möglich, daß eine Beschichtung mit der Farbe der Kunststoffhülle aufgebracht wird.

Die Beschichtung kann als flüssiger Lack aufgebracht werden. Dafür sind Verfahren geeignet, die für die Aufbringung von Farbschichten an sich bekannt sind. Besonders geeignet sind für die Aufbringung von sogenannten Ringsignierungen bekannte Verfahren, z.B. unter Verwendung von schwingenden Sprühdüsen.

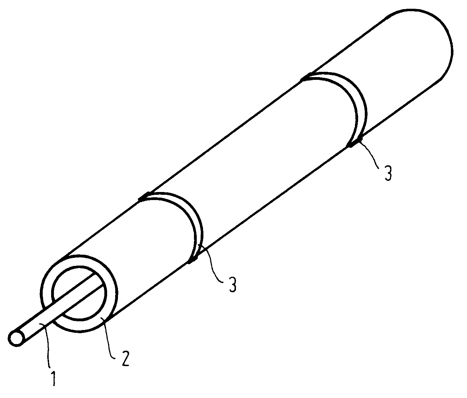

In der Zeichnung ist ein Abschnitt einer LWL-Ader dargestellt, auf deren Kunststoffhülle erfindungsgemäß farblose Ringe aufgebracht sind.

Ein Lichtwellenleiter 1 verläuft radial beweglich mit Überlänge in einer Kunststoffhülle 2. In regelmäßigen Abständen sind über die gesamte Länge der Kunststoff-hülle 2 Ringbeschichtungen 3 aufgebracht.

Bei einem ausgeführten Beispiel folgten die Ringe im Abstand von 17 mm aufeinander. Ihre Breite betrug etwa 2 mm. Die Schichtdicke war etwa 10 um.

Nach der Beschichtung wurden die Adern vor der weiteren Verarbeitung auf Maschinenspulen bei geringer Aufwickelzugkraft aufgewickelt. Beim folgenden Verseilvorgang mehrerer derartiger Adern zu einem optischen Kabel konnten hohe Abzugsgeschwindigkeiten zugelassen werden, ohne daß Störungen im Fertigungsablauf wie Unterstechen oder Aderrisse auftraten. Die optischen Eigenschaften der einzelnen Adern des optischen Kabels waren gleichmäßig gut. Die gleichen Vorteile ergaben sich auch im Falle von erfindungsgemäß beschichteten isolierten Kupferadern.

## Patentansprüche

1. Verfahren zur Herstellung einer Ader, welche einen optisch oder elektrisch leitenden Kern (1) und eine Kunststoffhülle (2) aufweist, bei dem die Ader auf eine Maschinenspule aufgewickelt wird,
dadurch gekennzeichnet, daß auf die Oberfläche der Kunststoffhülle (2) vor dem Auftrommeln auf die Maschinenspule eine optisch unauffällige Schicht (3) aufgebracht wird, welche eine Gleitbewegung nebeneinanderliegender Aderwindungen durch erhöhte Reibung untereinander und/oder durch gegenseitiges Verhaken erschwert.

2. Verfahren nach Anspruch 1,
dadurch gekennzeichnet, daß die Beschichtung kontinuierlich aus einem Stoff mit gegenüber der Kunststoffhülle höherem Reibwert aufgebracht wird.

3. Verfahren nach Anspruch 1,
dadurch gekennzeichnet, daß die Beschichtung in regelmäßigen Abständen aufgebracht wird.

4. Verfahren nach Anspruch 3,
dadurch gekennzeichnet, daß die Beschichtung in Form von Ringen (3) aufgebracht wird, welche in Längsrichtung der Ader mit einem Abstand aufeinanderfolgen, welcher ein Mehrfaches der Ringbreite beträgt.

5. Verfahren nach einem der Ansprüche 1 bis 5,
dadurch gekennzeichnet, daß eine farblose Beschichtung (3) aufgebracht wird.

6. Verfahren nach einem der Ansprüche 1 bis 5,
dadurch gekennzeichnet, daß eine Beschichtung (3) mit der Farbe der Kunststoffhülle (2) aufgebracht wird.

7. Verfahren nach einem der Ansprüche 1 bis 7,
dadurch gekennzeichnet, daß die Beschichtung (3) als flüssiger Lack aufgebracht wird.

## Claims

1. A method of maufacturing a wire comprising an optically or electrically conductive core (1) and a synthetic resin sheath (2), said wire being wound onto a machine spool, characterized in that, before the wire is wound onto the machine spool, the surface of the synthetic resin sheath (2) is provided with an optically inconspicuous layer (3) which makes it more difficult for adjacent wire turns to slide along each other by increasing the friction between the turns and/or by hooking together the turns.

2. A method as claimed in Claim 1, characterized in that the coating of a material having a higher coefficient of friction than the synthetic resin sheath is continuously provided.

3. A method as claimed in Claim 1, characterized in that the coating is provided at regular intervals.

4. A method as claimed in Claim 3, characterized in that the coating is provided in the form of rings (3) succeeding each other in the longitudinal direction of the wire at intervals which each are a multiple of the width of the rings.

5. A method as claimed in any one of the Claims 1 to 5, characterized in that a colourless coating (3) is provided.

6. A method as claimed in any one of the Claims 1 to 5, characterized in that a coating (3) having the same colour as the synthetic resin sheath (2) is provided.

7. A method as claimed in any one of the Claims 1 to 6, characterized in that the coating (3) is provided as a liquid lacquer.

## Revendications

1. Procédé pour la fabrication d'un conducteur, comportant un noyau (1) optiquement ou électriquement conducteur et une gaine en matériau synthétique (2), suivant lequel le conducteur est enroulé sur une bobine réceptrice, caractérisé en ce qu'avant l'enroulement sur la bobine réceptrice un revêtement (3) optiquement invisible est appliqué sur la surface de la gaine en matériau synthétique (2) aggravant un glissement de spires de conducteur juxtaposées du fait d'un frottement accru et/ou d'un verrouillage mutuels.

2. Procédé selon la revendication 1, caractérisé en ce que le revêtement constitué d'une matière présentant une valeur de frottement supérieure à celle de la gaine en matériau synthétique est appliqué de façon continue.

3. Procédé selon la revendication 1, caractérisé en ce que le revêtement est appliqué de manière à être espacé régulièrement.

4. Procédé selon la revendication 3, caractérisé en ce que le revêtement est appliqué en forme d'anneaux (3) qui se succèdent en sens longitudinal du conducteur et qui sont espacés d'une valeur qui est égale à un multiple de la largeur d'anneau.

5. Procédé selon l'une quelconque des revendications 1 à 5, caractérisé en ce qu'il est appliqué un revêtement incolore (3).

6. Procédé selon l'une quelconque des revendications 1 à 5, caractérisé en ce que l'on applique un revêtement (3) présentant la même couleur que la gaine en matériau synthétique (3).

7. Procédé selon l'une quelconque des revendications 1 à 7, caractérisé en ce que le revêtement (3) peut être appliqué comme laque liquide.
